# EUROPEAN PATENT SPECIFICATION

(11) **EP 3 898 106 B1**
(45) Date of publication and mention of the grant of the patent: **22.05.2024**
(21) Application number: 19832551.6
(22) Date of filing: 20.12.2019
(51) Int. Cl.: B25B 29/02

(54) **DEVICE FOR TENSIONING AND TIGHTENING A SCREW**
VORRICHTUNG ZUM SPANNEN UND ANZIEHEN EINER SCHRAUBE
DISPOSITIF DE MISE EN TENSION ET DE SERRAGE D'UNE VIS

(30) Priority: 21.12.2018 GB 201821019
(43) Date of publication of application: 27.10.2021
(73) Proprietor: Caterpillar Energy Solutions GmbH, 68167 Mannheim (DE)
(72) Inventor: GUISASOLA, Inigo, 68167 Mannheim (DE); EHLERS, Daniela, 68167 Mannheim (DE); WEITZEL, Michael, 68167 Mannheim (DE); TRINKEL, Ralf, 68167 Mannheim (DE)
(74) Representative: Novagraaf Group
(86) International application number: PCT/EP2019/025476
(87) International publication number: WO 2020/126099

(56) References cited:
- EP-A1- 0 023 284
- WO-A1-2017/211749
- DE-A1- 3 047 705
- SE-B- 395 392
- US-A- 2 885 919
- US-A- 4 604 918

## Description

### Technical Field

The present invention refers to a device for tensioning and tightening and/or for loosening and untightening a tensable connecting element, such as a screw, a bolt or a threaded rod, fastened to a component to be tightened or loosened.

### Technological Background

Tensable connecting elements, such as tensable screw connections, screws, bolts or threaded rods, for tightening or connecting components are well known. For installing such tensable connecting elements, the use of screw tensioning devices is known, for example, in the field of steel constructions and various engine design applications. These screw tensioning devices generally operate based on a torque-free tensioning method, according to which pulling forces are used to lengthen large screws or bolts in an elastic range during installation such that, upon releasing the pulling forces, the connecting elements retract and thereby apply tensional forces onto the components to be tightened.

Such a screw tensioning device, for example, is known from US 2018/0215022 A1. In the known device, hydraulically induced pulling forces are used for tensioning a screw engaged with a fixation element of the device. The known device comprises a support element configured to support the fixation element against a component to be tightened during tensioning operation. The fixation element is arranged to be movable relative to the support element so as to apply tension or to remove tension from the screw.

In the following, the use of the known screw tensioning device for tensioning and tightening a screw is described. At first, a first end of a screw is connected to a first component via a threaded means. Then, a second component to be fastened to the first component is provided such that a threaded rod of the screw extends therethrough. Via a second end of the screw, a nut is placed on the screw so as to be engaged with the threaded rod. Thereafter, the second end of the screw is engaged with the screw tensioning device and a pulling force is applied thereto so as to elastically lengthen the screw. In this tensioned and lengthened state of the screw, the nut is further tightened such that, upon releasing the pulling force applied to the screw, the screw together with the nut apply a tensional force for form- and/or force-fittingly connecting the first to the second component.

Typically, for further tightening the nut in the tensioned and lengthened state of the screw, the support element is provided with openings through which the nut can be reached with a tool by an operator. More specifically, the operator inserts an end of the tool into the openings at a side of the nut so as to turn and thus to tighten or loosen the nut manually with the tool.

Such a procedure, however, may be arduous and time-consuming for an operator.

A tensioning device according to the preamble of claim 1 is known from EP0023284A1.

### Summary of the invention

In view of the prior art, it is an objective to suggest an improved device for tensioning and tightening a screw, which in particular may be operated more efficiently.

This object is solved by means of a device for tensioning and tightening a screw having the technical features of claim 1 and a system for tensioning and tightening at least two screws having the technical features of claim 11. Preferred embodiments are set forth in the present specification, the Figures as well as the dependent claims.

Accordingly, a device is provided for tensioning and tightening a screw fastened to a component to be tightened. The device comprises an engagement element connectable to the screw and a support element configured to support the device against the component and to translationally guide the engagement element, i.e. relative to the component to be tightened. The device further comprises a connecting element connectable to a nut engaged with the screw and a screwing unit for rotationally actuating the connecting element relative to the screw, wherein the screwing unit comprises a spring element configured to exert an actuating torque for rotating the connecting element about a longitudinal axis of the screw, and wherein a first end of the spring element is structurally coupled to the connecting element in a torque-transmitting manner and a second end of the spring element is structurally coupled to the engagement element in a torque-transmitting manner.

Furthermore, a system is provided for tensioning and tightening at least two screws fastened to at least one component. The system comprises at least two devices as described above and a central actuating unit for simultaneously actuating the screwing units of the at least two devices.

### Brief description of the drawings

The present disclosure will be more readily appreciated by reference to the following detailed description when being considered in connection with the accompanying drawings in which:
Figure 1 schematically shows a sectional view of a device for tensioning and tightening a screw according to a first embodiment,
Figure 2 schematically shows an enlarged sectional view of a screwing unit deployed in the device depicted in Figure 1,
Figure 3 schematically shows an enlarged sectional view A of a locking element deployed in the device depicted in Figure 2 in a locked state,
Figure 4 schematically shows the enlarged sectional view A of the locking element depicted in Figure 3 in a released state,
Figure 5 schematically shows a sectional view of a device for tensioning and tightening a screw according to a second embodiment,
Figure 6 schematically shows a cross sectional view of the device along the section plane B-B depicted in Figure 5,
Figure 7 schematically shows a sectional view of a device for tensioning and tightening a screw according to a third embodiment,
Figure 8 schematically shows a cross sectional view of the device along the section plane C-C depicted in Figure 7,
Figure 9 schematically shows a cross sectional view of a system for tensioning and tightening four screws simultaneously, and
Figure 10 schematically shows a sectional view of a device for tensioning and tightening a screw according to a fourth embodiment.

### Detailed description of preferred embodiments

In the following, the invention will be explained in more detail with reference to the accompanying Figures. In the Figures, like elements are denoted by identical reference numerals and repeated description thereof may be omitted in order to avoid redundancies.

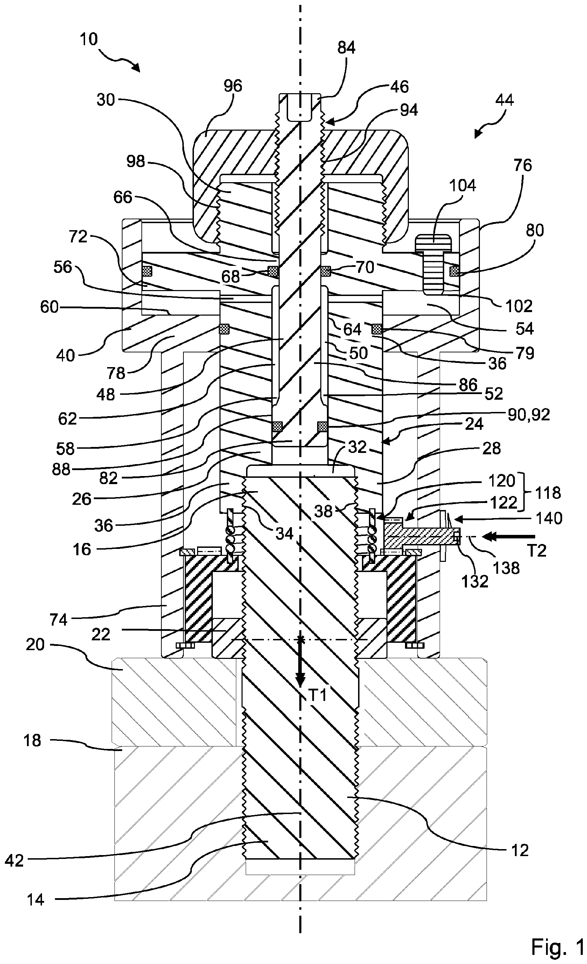

Figure 1 schematically shows a first embodiment of a device 10 for tensioning and tightening a screw 12 and thus for forming a screw connection. The shown device 10 may be used for tensioning, i.e. preloading, and/or loosening, i.e. untighten, tensable screw connections. In the context of the present disclosure, the term "tensable" refers to a material property indicating that a component, i.e. the screw 12, at least partially, is capable of being elastically expanded and thus of storing an amount of elastic energy when being subjected to a tensioning force.

Specifically, the screw 12 comprises a first end 14, an opposed second end 16 and an elastic part positioned between the first end 14 and the second end 16. The elastic part is capable of being elastically lengthened when the screw 12 is subjected to a pulling force by means of the device 10.

The screw 12 is configured for connecting, i.e. form- and/or force-fittingly connecting, a first component 18 to a second component 20. Specifically, the first end 14 of the screw 12 is configured to be connected to the first component 18 by means of a threaded engagement, as depicted in Figure 1. The elastic part of the screw 12 extends through the second component 20 such that the second end 16 of the screw 12 is positioned on a side of the second component 20 facing away from the first component 18. For connecting the first and the second component 18, 20, a nut 22 is provided which is in threaded engagement with the elastic part of the screw 12. The term "nut" in the context of the present disclosure generally refers to any type of fastener configured for being engaged with a screw by a threaded engagement. In the shown configuration, the nut 22 is provided in the form of a hexagon nut.

The device 10 comprises an engagement element 24 connectable to the screw 12. Specifically, the engagement element 24 includes a cylindrical portion 26 having a first end 28 and a second end 30. At the first end 28, the engagement element 24 includes a cylindrical recess 32 to house the second end 16 of the screw 12, while the first end 14 of the screw 12 is connected to the first component 18. The recess 32 includes internal threads 34 formed on a side wall 36 of the engagement element 24 to engage with complementary threads 38 formed at the second end 16 of the screw 12.

Further, the device 10 comprises a support element 40 configured to support the device 10 against the second component 20 and to translationally guide the engagement element 24 relative to the first and second component 18, 20. In other words, the engagement element 24 is translationally movable relative to the support element 40 along a longitudinal axis 42 of the device. Specifically, upon translationally moving the engagement element 24 relative to the support element 40, a tensioning force may be applied to or may be removed from the screw 12 fixed to the engagement element 24.

The device 10 further comprises a screw actuating unit 44 for translating a rotational movement applied to a screw actuating element 46 into a translational movement of the engagement element 24 relative to the first and second component 18, 20 to be tightened and thus relative to the support element 40. In other words, the screw actuating unit 44 is provided so as to actuate the engagement element 24 relative to the support element 40.

In the following, the structure and operation of the screw actuating unit 44 will be explained in more detail. The screw actuating unit 44 is hydraulically actuated. In other words, a hydraulic fluid is used to transfer motive power so as to move the engagement element 24 relative to the support element 40. For doing so, the screw actuating unit 44 comprises a piston 48 accommodated within and movable relative to the engagement element 24 along the longitudinal axis 42. Further, a fluid chamber 50 accommodating the fluid is provided which is delimited by the piston 48, the engagement element 24 and the support element 40. In this configuration, the screw actuating unit 44 is designed such that a translational movement of the piston 48 manipulates a volume of the fluid chamber 50 and thereby moves the engagement element 24 with respect to the support element 40 so as to apply or remove a tension acting on the screw 12 connected to the engagement element 24.

More specifically, the fluid chamber 50 comprises two distinct portions, a piston portion 52 delimited by and provided between the piston 48 and the engagement element 24 and an effective portion 54 delimited by and provided between the engagement element 24 and the support element 40. The piston portion 52 and the effective portion 54 are fluid-communicatively connected via two connecting bores 56 provided in the engagement element 24. A base area 58 of the piston portion 52 is provided with an effective cross section that is smaller than an effective cross section of a base area 60 of the effective portion 54. In this context, the "effective cross section" refers to an area that is perpendicular to the longitudinal direction 42 and thus perpendicular to a moving direction of both the piston 48 and the engagement element 24 relative to the support element 40. By this configuration, an actuating force applied to the piston 48 is hydraulically transformed into a force acting on the engagement element 24 which absolute value is higher compared to the actuating force acting on the piston 48.

For accommodating the piston 48, the engagement element 24 further includes a bore 62 extending along the longitudinal axis 42 of the device 10. Specifically, the bore 62 extends from the second end 30 of the cylindrical portion 26 to the recess 32 formed at the first end 28 of the cylindrical portion 26 of the engagement element 24 and is configured to receive the piston 48. A diameter of the bore 62 may be less than the diameter of the recess 32 which thus together form a stepped opening within the engagement element 24. Further, the bore 62 includes a variable diameter along the longitudinal axis 42. In other words, a wall of the engagement element 24 has a variable width along the length of the bore 62 such that the diameter of the bore 62 changes along the length of the bore 62. As depicted in Figure 1, the bore 62 includes a wider portion 64 and a narrower portion 66. At the wider portion 64, a distance between the piston 48 and the wall of the engagement element 24 is greater than at the narrower portion 66.

As shown in Figure 1, at the narrower portion 66, the piston 48 contacts the wall of the engagement element 24. The narrower portion 66 includes a groove 68 formed in the wall of the engagement element 24 and extending along a perimeter of the bore 62. A first sealing ring 70 is disposed in the groove 68 to form a seal joint between the piston 48 and the engagement element 24. The first sealing ring 70 is positioned between the piston 48 and the wall of the engagement element 24.

The engagement element 24 also includes a plate 72 extending radially from the cylindrical portion 26 of the engagement element 24. The plate 72 is positioned normal to the longitudinal axis 42 and is proximal to the second end 30 of the engagement element 24. The plate 72 is cylindrical in shape and forms a flange portion in proximity to the second end 30 of the engagement element 24.

The engagement element 24 is received at least partly within the support element 40. As set forth above, the engagement element 24 is arranged and adapted to be moved relative to the support element 40 to apply tension to or remove tension from the screw 12. The support element 40 includes a first cylindrical portion 74 and a second cylindrical portion 76 connected to one another by a connection portion 78. The first cylindrical portion 74 forms a lower part of the support element 40 to be positioned on the second component 20. The first cylindrical portion 74 surrounds a part of the screw 12, the first end 28 of the engagement element 24 and a portion of the cylindrical portion 26 of the engagement element 24. Specifically, the first cylindrical portion 74 surrounds the portion of the cylindrical portion 26 which is positioned underneath the plate 72 in the illustration depicted in Figure 1.

The second cylindrical portion 74 is spaced away from the first cylindrical portion 74 by the connection portion 78. The second cylindrical portion 76 surrounds the plate 72 of the engagement element 24 such that an inner surface of the second cylindrical portion 76 contacts an outer surface of the plate 72. In other words, the plate 72 is positioned within the second cylindrical portion 76 of the support element 40 and is configured to move relative to the second cylindrical portion 76.

Further, a third sealing ring 80 is positioned between the inner surface of the second cylindrical portion 76 and the outer surface of the plate 72 to prevent leakage of the fluid accommodated in the fluid chamber 50. Specifically, the third sealing ring 80 may be positioned in a groove formed either into the inner surface of the second cylindrical portion 76 or into the outer surface of the plate 72, as depicted in Figure 1

As can be gathered from Figure 1, the first cylindrical portion 74, the second cylindrical portion 76, and the connection portion 78 are hollow cylindrical portions having inner diameters different from each other, thereby forming stepped configurations with each other. The inner diameter of the connection portion 78 is smaller than the inner diameters of both the first cylindrical portion 74 and the second cylindrical portion 76. The connection portion 78 comprises an opening to guide the engagement element 24 within the support element 40, which opening has a diameter slightly larger than the diameter of the portion of the engagement element 24 guided by the support element 40. The connection portion 78 may further define a recess in which a second sealing ring 79 may be disposed for providing a sealing between the engagement element 24 and the connection portion 78.

The plate 72, the connection portion 78, and the second cylindrical portion 76 of the support element 40 together form the effective portion 54 of the fluid chamber 50. The effective portion 54 is fluidly connected to the bore 62 in the engagement element 24 via the connecting bores 56. The effective portion 54 is configured to receive the fluid from the piston portion 52 accommodated in the bore 62 of the engagement element 24 due to an axial movement of the piston 48 slidably positioned within the engagement element 24.

In this way, the fluid may move back and forth between the piston portion 52 and the effective portion 54 of the fluid chamber 50. During operation, the position of the piston 48 determines how much fluid is displaced from the piston portion 52 to the effective portion 54, and vice versa. As can be gathered from Figure 1, when the piston 48 is moved in an upward direction, i.e. in a direction facing away from the engagement element 24, the size of the piston portion 52 gets smaller. Accordingly, fluid is displaced therefrom into the effective portion 54 causing an increase of pressure in the effective portion 54 as more and more fluid enters thereinto. This pressure acts on the engagement element 24 which causes it to move in a direction facing away from the support element 40, i.e. along the longitudinal axis 42. This movement induces tensioning and thus lengthening of the screw 12. In this tensioned and lengthened state of the screw 12, an operator may tighten the nut 22 so as to position the nut 22 closer to the second component 20, i.e. to abut on the second component 20. This may be performed by reaching the nut 22 through openings in the support element 40 with a tool, an end of which may be inserted into the openings at the side of the nut 22 to turn and thus tighten or loosen the nut 22.

The piston 48 has a generally cylindrical shape with a head end 82 and a rod end 84 that are distal to one another and connected by a shaft 86. The head end 82 has a sealing portion 88 that is larger in diameter than the shaft 86. The diameter of sealing portion 88 corresponds to a diameter of the bore 62 in the engagement element 24. The sealing portion 88 comprises a recess 90 that is circular in nature. A fourth sealing ring 92 is provided within the recess 90.

The first to fourth sealing ring 70, 79, 80, 92 may be made from metal, such as iron or steel, ceramics, fibrous materials, elastomer and/or plastic.

The piston 48 further includes a threaded portion 94 that is in threaded engagement with a cap 96 of the engagement element 24. The cap 96 is firmly fixed to the second end 30 of the cylindrical portion 26 by means of a threaded connection 98. Alternatively, the cap 96 may be pressed to the second end 30 of the cylindrical portion 26 of the engagement element 24.

In the shown configuration, the screw actuating element 46 is formed by the rod end 84 of the piston 48. As the piston 48 and thus the screw actuating element 46 are connected to the cap 96 by means of a threaded engagement, the screw actuating unit 44 is designed such that a rotational movement of the screw actuating element 46 is transformed into a translational movement of the piston 48 relative to the engagement element 24 which manipulates the volume of the fluid chamber 50 and thereby moves the engagement element 24 with respect to the support element 40. As a result, upon rotationally manipulating the actuation element 46, a tensioning or loosening of the screw 12 connected to the engagement element 24 is performed by means of the device 10.

Further, the effective portion 54 of the variable fluid chamber 50 is fluidly connected to a pressure metering device (not shown) for determining a pressure of the fluid present in the effective portion 54. A vent opening 102 is arranged in fluid connection with the effective portion 54 to remove any gases therefrom. The vent opening 102 is closed by a closure screw 104.

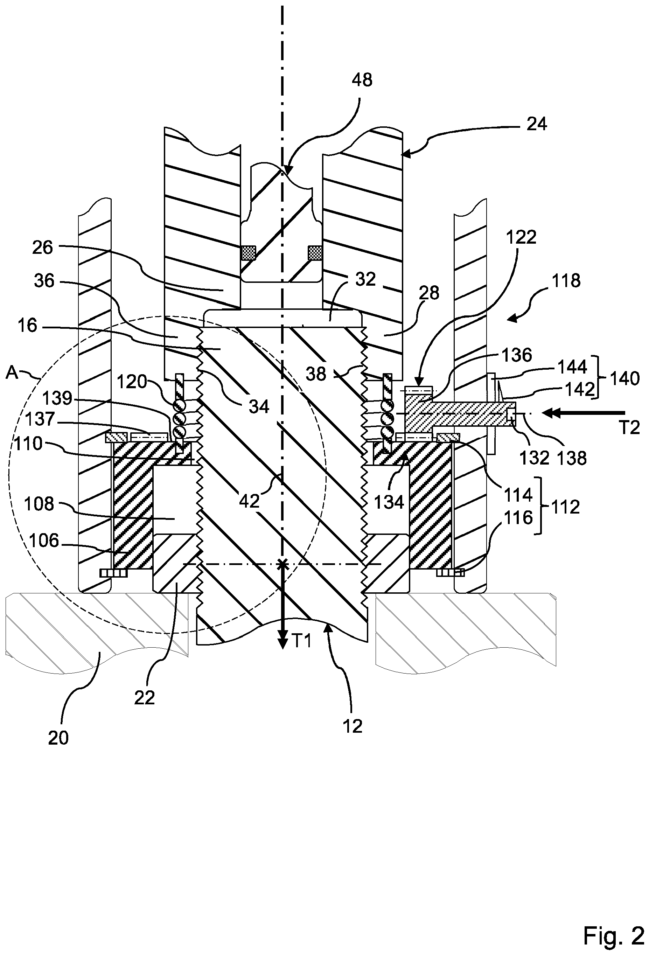

As can be gathered from Figure 2, the device 10 further comprises a connecting element 106 which is configured for being connected to the screw 12 in a torque-transmitting manner. Specifically, the connecting element 106 is provided in the form of a connecting sleeve having a recessed shape for being coupled to the nut 22 in a form-fitting manner. In other words, the connecting element 106 includes a hexagonal recess 108, an inner surface of which is designed complementary to an outer surface of the nut 22. The connecting element 106 further comprises a through hole 110 opening into the hexagonal recess 108, wherein the screw 12 extends through both the hexagonal recess 108 and the through hole 110.

The connecting element 106 is rotationally mounted to the support element 40 by means of a bearing 112. Thus, the bearing 112 provides for free rotation of the connecting element 106 relative to the support element 40 around the longitudinal axis 42 of the device 10, which coincides with a longitudinal axis of the engagement element 24 and the screw 12. However, a translational movement between the connecting element 106 and the support element 40 is locked by means of the bearing 112. For example, the bearing 112 may comprise a first and a second retaining ring 114, 116 installed in a groove included in a side wall of the support element 40, respectively, such that the connecting element 106 is interposed between the first and the second retaining ring 114, 116 along the longitudinal axis 42. In this way. The connecting element 106 is rotatable relative to the screw 12 around the screw's longitudinal axis.

Furthermore, the device 10 comprises a screwing unit 118 for rotationally actuating the connecting element 106 relative to the engagement element 24 and thus relative to the support element 40 and the screw 12. For doing so, the screwing unit 118 comprises a spring element 120 and a nut actuating element 122, each of which is configured to, individually or together, apply an actuating torque T1 to the connecting element 106 to tighten or untighten the screw connection between the nut 22 and the screw 12. Thus, the actuating torque T1 generated by the screwing unit 118 and applied to the connecting element 106 and thus to the nut 22 form-fittingly coupled thereto points in a direction coinciding with the longitudinal axis 42.

In the shown configuration, the screwing unit 118 of the device 10 comprises both the spring element 120 and the nut actuating element 122. In an alternative configuration, the screw actuating element 122 may be omitted.

The spring element 120 is provided in the form of a torsion spring interposed between the first end 28 of the engagement element 24 and the connecting element 106 such that a longitudinal axis of the spring element 120 coincides with the device's longitudinal axis 42 and the screw 12 extends through the spring element 120. Specifically, a first end face of the spring element 120 is mounted to the first end 28 of the engagement element 24 and an opposed second end face of the spring element 120 is mounted to the connecting element 106 in a torque-transmitting manner.

Further, the spring element 120 is designed and disposed in the device 10 such that it is elastically deformable upon rotationally actuating the connecting element 106 relative to the screw 12. In other words, when the connecting element 106 is rotated relative to the screw 12, i.e. the engagement element 24, the spring element 120 is elastically deformed and thereby loaded so as to store elastic energy. In this loaded state, the spring element 120 exerts the actuating torque T 1 to the connecting element 106, thereby enabling to rotationally actuate the nut 22. In other words, the elastic energy stored by the spring element 120 may be transformed into rotational movement of the nut 22.

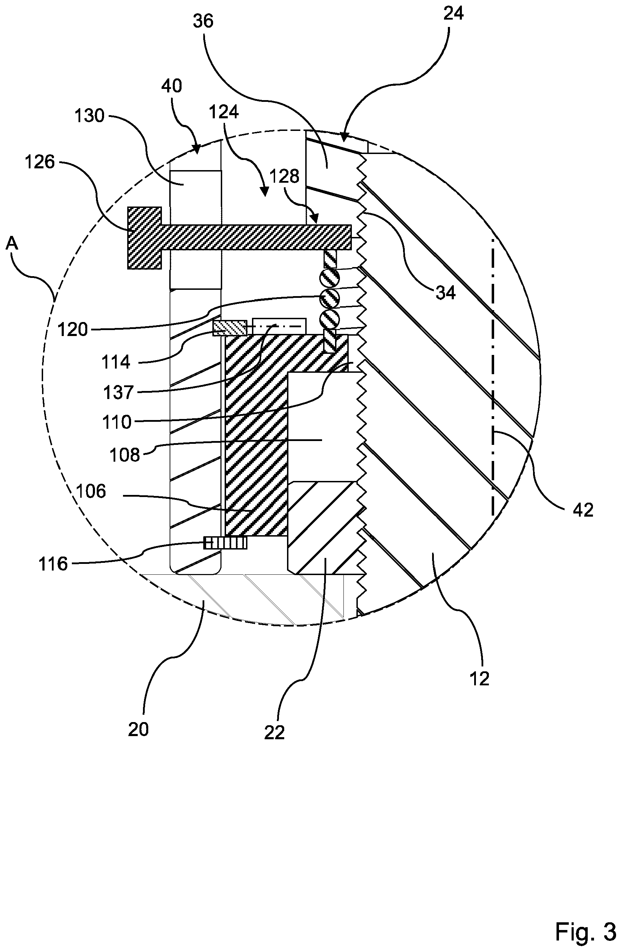

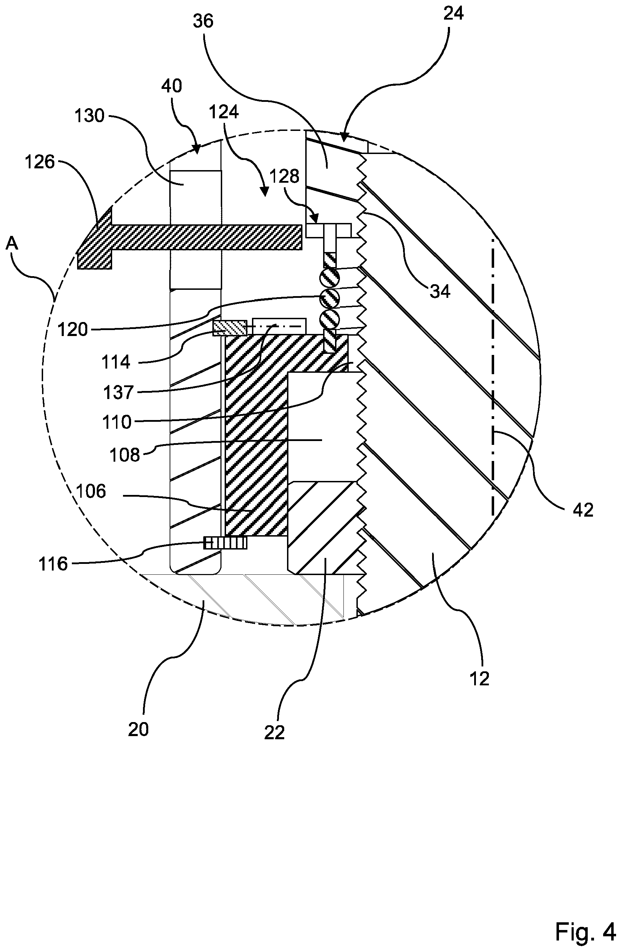

Additionally, as depicted in Figures 3 and 4, the screwing unit 118 may comprise a locking element 124 for releasably coupling the spring element 120 to the engagement element 24 in a torque-transmitting manner. The locking element 124 comprises a locking pin 126 which is laterally inserted into a groove 128 formed at a connecting portion between the engagement element 24 and the spring element 120, as can be gathered from Figure 3. In other words, the groove 128 is partially provided in the engagement element 24 and partially in the spring element 120.

When being inserted into the groove 128, the locking pin 126 provides a form-fitting connection in a circumferential direction between the engagement element 24 and the spring element 120. As a result, a relative rotational movement between the engagement element 24 and the spring element 120 is locked. In this state depicted in Figure 3, upon rotationally actuating the connecting element 106 relative to the engagement element 24, the spring element 120 is elastically deformable so as to store elastic energy. The locking element 124 may be operated by the operator by inserting the locking pin 126 into or withdrawing the locking pin 126 from the groove 128. When the locking pin 126 is withdrawn from the groove 128 by an operator as shown in Figure 4, the form-fitting connection between the engagement element 24 and the spring element 120 is released. Accordingly, in this state shown in Figure 4, the connecting element 106 may be rotationally actuated relative to the engagement element 24 without elastically deforming and thereby loading the spring element 120.

In the locked state of the locking element 124 depicted in Figure 3, the locking pin 126 protrudes from the groove 128 through an opening 130 provided in the side wall of the support element 40 such that an end portion thereof is accessible for an operator so as to conveniently lock or release the form-fitting connection provided by the locking element 124. In an alternative configuration, the locking element 124 may be designed so as to releasably provide a form-fitting connection between the spring element 120 and the connecting element 106.

In the following, the nut actuating element 122 is further specified with reference to Figure 2. The nut actuating element 122 constitutes a user interface element for operating the screwing unit 118. For improving the device's operability, the nut actuating element 122 partially protrudes from an outer surface of the support element 40. In this way, good accessibility of the nut actuating element 122 for the operator may be ensured. Further, the nut actuating element 122 extends through the side wall of the support element 40 and is rotatably mounted thereto.

The nut actuating element 122 is configured for being actuatable by an operator using an electric or manual screwdriver. Specifically, the nut actuating element 122 is provided with a tool interface 132 at an end section thereof which protrudes from the outer surface of the support element 40 and which is formed by a hexagonal recess.

In the shown configuration, the screwing unit 118 is configured to translate a rotational movement of the nut actuating element 122 into a rotational movement of the connecting element 106 and thus of the nut 22. Specifically, the screwing unit 118 comprises a gear unit in the form of a bevel gear 134 for coupling the nut actuating element 122 to the connecting element 106 in a torque-transmitting manner. In other words, the bevel gear 134 is configured to transform and input torque T2 applied to the nut actuating element 122 into the actuating torque T1 applied to the connecting element 106, wherein an absolute value of the actuating torque T1 is higher compared to the input torque T2.

Generally, in the context of the present disclosure, the term "bevel gear" may refer to any type of gears for torque-transmission between two rotatable elements which rotational axis are inclined, i.e. not parallel, to one another.

More specifically, the nut actuating element 122 comprises a shaft rotatably mounted to the side wall of the support element 40, at the first end of which the tool interface 132 and at an opposed second end a gear wheel 136 is provided. A rotational axis 138 of the nut actuating element 122 and thus of the gear wheel 136 is substantially perpendicular to a rotational axis of the connecting element 106 which coincides with the longitudinal axis 42.

Further, the connecting element 106 is provided with gear teeth 137 extending on a front surface 139 of the connecting element 106 which is oriented towards the engagement element 24. In other words, a surface normal of the front surface 139 points towards the engagement element 24. As can be gathered from Figure 2, the gear teeth 137 are arranged on the front surface 139 circumferentially around the longitudinal axis 42 and are designed complementary to the gear wheel 136 of the nut actuating element 122.

In this configuration, the gear wheel 136 of the nut actuating element 122 and the gear teeth 137 of the connecting element 106 form complementary coupling interfaces of the bevel gear 134.

Further, the device 10 comprises a display unit 140 for displaying a change of a torsion angle between the connecting element 106 and the screw 12 and likewise between the nut 22 and the screw 12 upon actuating the screwing unit 118. In other words, the display unit 140 is configured for indicating an amount of a relative rotational movement between the connecting element 106 and the screw 12. More specifically, the display unit 140 is configured to display a parameter being indicative of the relative rotational movement between the connecting element and the screw. For example, the parameter may be proportional to the relative rotational movement. Alternatively or additionally, the display unit 140 may be configured to indicate whether a predefined minimal amount for the relative movement between the connecting element and the screw is reached during operation of the device.

The display unit 140 comprises a pointer 142 firmly fixed to the shaft of the nut actuating element 122 and a scale 144 firmly fixed to the outer surface of the support element 40, wherein the scale 144 is interposed between the pointer 142 and the side wall of the support element 40. In this configuration, the pointer 142 is rotatably coupled to the connecting element 106 via the nut actuating element 122 and the bevel gear 134 such that a rotational movement of the connecting element 106 relative to the screw 12 is translated into a rotational movement of the pointer 142.

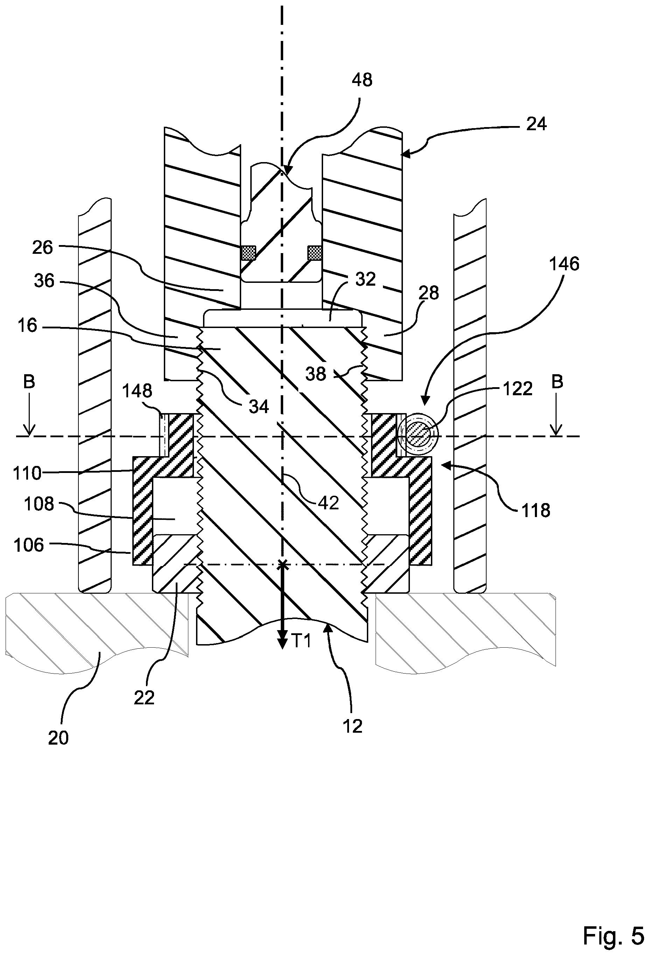

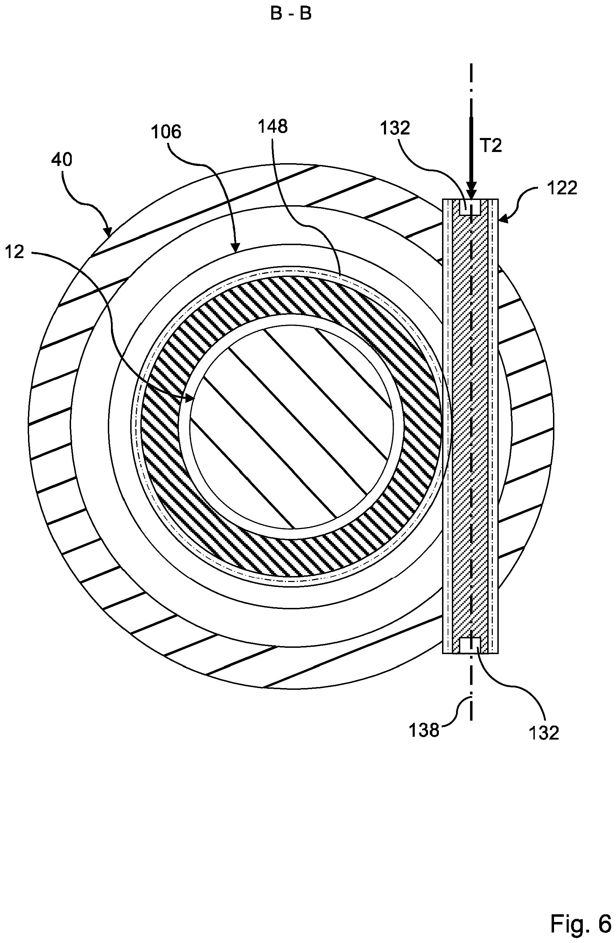

Figures 5 and 6 show another configuration of the device 10 for tensioning and tightening a screw 12. Compared to the configurations depicted in Figures 1 to 4, the screwing unit 118 of the device 10 comprises a worm drive 146 as a gear unit for coupling the nut actuating element 122 to the connecting element 106.

Specifically, in the shown configuration, the nut actuating element 122 is provided in the form of a worm screw designed complementary to and engaged with a worm wheel 148 comprised in the connecting element. The worm wheel 148 is formed by a gearing or gear teeth disposed circumferentially around a longitudinal axis 42 on the outer surface of the connecting element 106. Although not shown in Figures 5 and 6, the device 10 comprises a spring element and may comprise a display unit. The display unit may comprise a pointer provided at an end portion of the nut actuating element 122 which may be coupled to the connecting element 106 via the nut actuating element 122 and the worm drive 146.

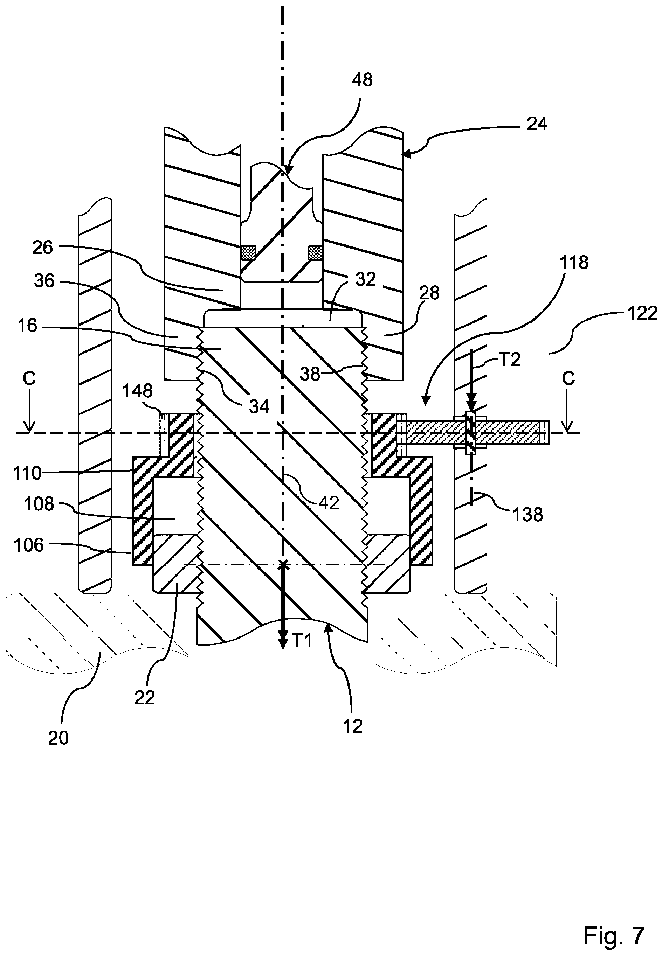

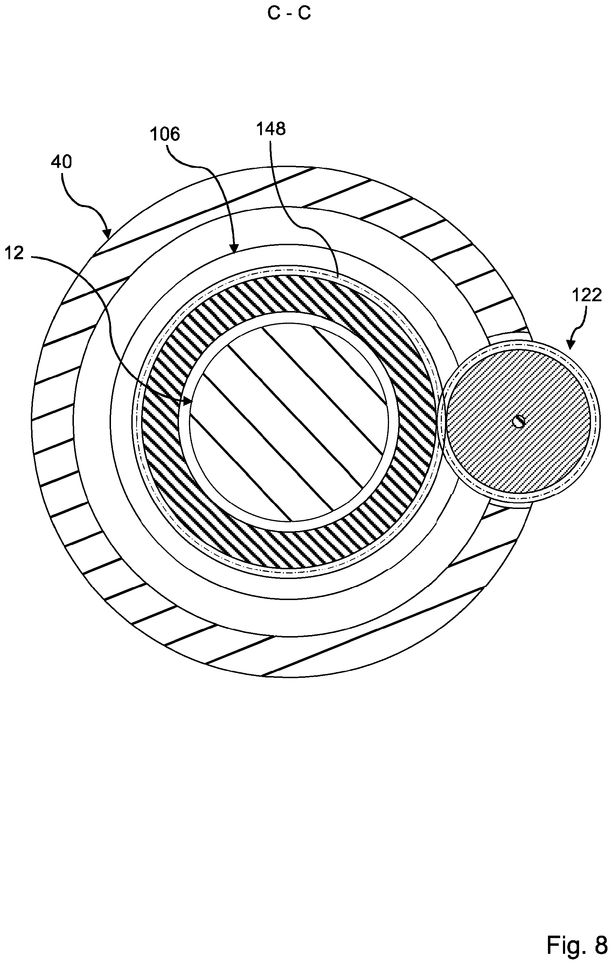

Figures 7 and 8 show another configuration of the device 10 for tensioning and tightening a screw 12. Compared to the configurations depicted in Figures 1 to 6, the screwing unit 118 of the device 10 is provided such that the rotation axis 138 of the nut actuating element 122 is parallel to and translationally shifted relative to the rotational axis, i.e. coinciding with the longitudinal axis 42, of the connecting element 106. In this configuration, the nut actuating element 122 is constituted by a gear wheel, a circumferentially surface of which is provided with a gearing or gear teeth designed complementary to a gearing or gear teeth of the worm wheel 148 circumferentially arranged on an outer surface of the connecting element 106 around the device's longitudinal axis 42.

In a further development, the actuation of the nut actuating element 122 may be performed in dependence on the actuation of the screw actuating element 46. For example, the nut actuating element 122 may be coupled to the screw actuating element 46 in a torque-transmitting manner. For example, a further gear or transmission unit may be provided for transforming a rotational movement of the screw actuating element 46 relative to the engagement element 24 into a rotational movement of the nut actuating element 46 relative to the support element 40. In this way, upon increasing the pressure in the fluid chamber 50 and thus upon lengthening of the connecting element or screw 12, the nut 22 is screwed on the screw 12. The further gear or transmission unit may be provided such that, upon rotation of the screw actuating element 46, the nut actuating element 122 is rotated about its longitudinal axis with a rotational speed that is higher or lower compared to a rotational speed of the screw actuating element 46 about its longitudinal axis. In this configuration, in the torque-transmitting connection between the screw actuating element 46 and the nut actuating element 122, a torque limiter may be provided. The torque limiter may be configured to interrupt or decouple the torque-transmitting connection between the screw actuating element 46 in the nut actuating element 122 in case of overload so as to prevent the device 10, in particular the nut 22 or the screwing unit 118, from being damaged. For example, the torque limiter may be provided in the screwing unit 118 and/or in the transmission or gear unit.

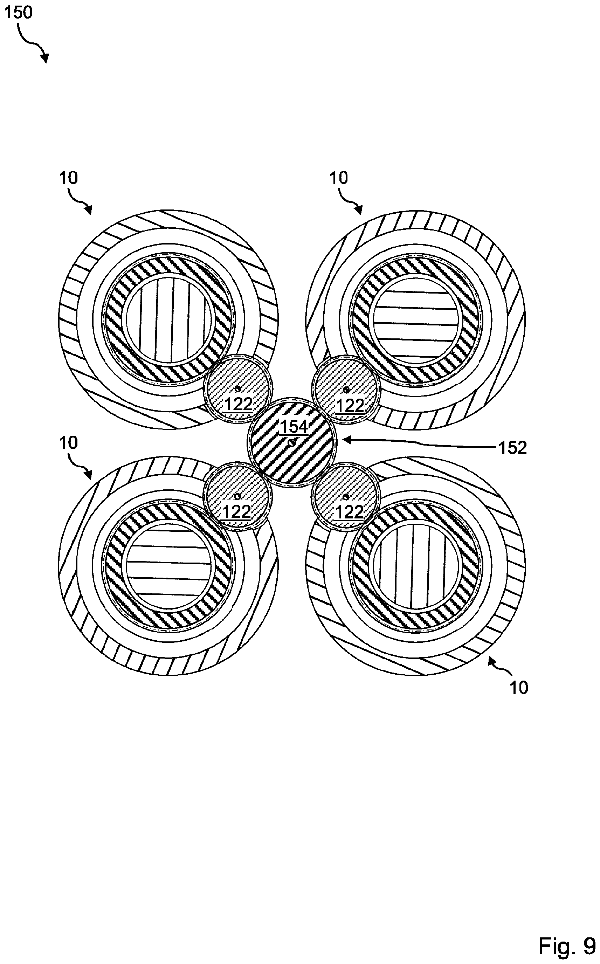

Figure 9 shows a system 150 for tensioning and tightening four screws 12 fastened to at least one component. The system 150 comprises four devices 10 as depicted in Figures 7 and 8. The devices 10 are rotatably mounted in a housing (not shown) such that each of the devices 10 can be individually rotated about its longitudinal axis so as to bring its engagement element 24 into threaded engagement with a screw 12, respectively.

Further, the system 150 comprises a central actuating unit 152 for simultaneously actuating the screwing units 118 of each of the four devices 10. As set forth above, each of the devices 10 comprises a connecting element 106 connectable to a nut 22 engaged with one of the screws 12 to be tensioned and tightened. The central actuating unit 152 is provided such that it is mechanically and structurally connected to each screwing unit 118 and thus to each connecting element 106 of the devices 10 in a torque-transmitting manner.

Specifically, each of the screwing units 118 comprises the above described nut actuating element 122 in the form of a gear wheel, each of which is coupled to the respective connecting element 106 of the device 10 in a torque-transmitting manner. For coupling the central actuating unit 152 to the respective nut actuating elements 122, the central actuating unit 152 comprises a central gear wheel 154 connectable to each of the nut actuating elements 122 in a torque-transmitting manner.

The central actuating unit 152 is provided such that the central gear wheel 154 is translationally movable along the longitudinal axis 42 of the devices 10 so as to releasably couple the central gear wheel 152 to each one of the nut actuating elements 122. Specifically, the central gear wheel 154 is translationally movable between a first end position, in which the central gear wheel 154 is engaged with each one of the nut actuating elements 122 as depicted in Figure 9, and a second end position, in which the central gear wheel 154 is engaged with a gearing or gear teeth disposed circumferentially around the longitudinal axis 42 on an outer surface of the support element 40 of each device 10. When being positioned in the first end position as depicted in Figure 9, the central actuating unit 152 simultaneously actuates the screwing unit 118 of each device 10 by rotationally actuating the central gear wheel 154. However, when being positioned in the second end position, the central actuating unit 152 simultaneously rotates each device 10 individually around its longitudinal axis 42, thereby bringing the engagement elements 24 of the device 10 in threaded engagement with the respective screws 12.

Accordingly, the system 150 enables both to simultaneously bring each of the devices 10 into engagement with the respective screws 12 to be tensioned and tightened as well as to simultaneously tighten or untighten a threaded connection between the screw 12 and the respective nut 22. In this configuration, the operator may actuate the central gear wheel 154 by means of an electric screwdriver.

Alternatively, the system 150 may comprise at least two devices 10 as depicted in any one of Figures 1 to 8, wherein the central actuating unit 152 may comprise at least two electric actuators, each of which is coupled to one nut actuating element 122 of the devices 10. In this configuration, the central actuating unit 152 may comprise a central control unit for actuating each of the electric actuators so as to simultaneously actuate the connecting elements 106 via the nut actuating elements 122.

Further, the central actuating unit may comprise a torque limiter (not shown) for limiting the maximum actuation torque applied to each one of the connecting elements.

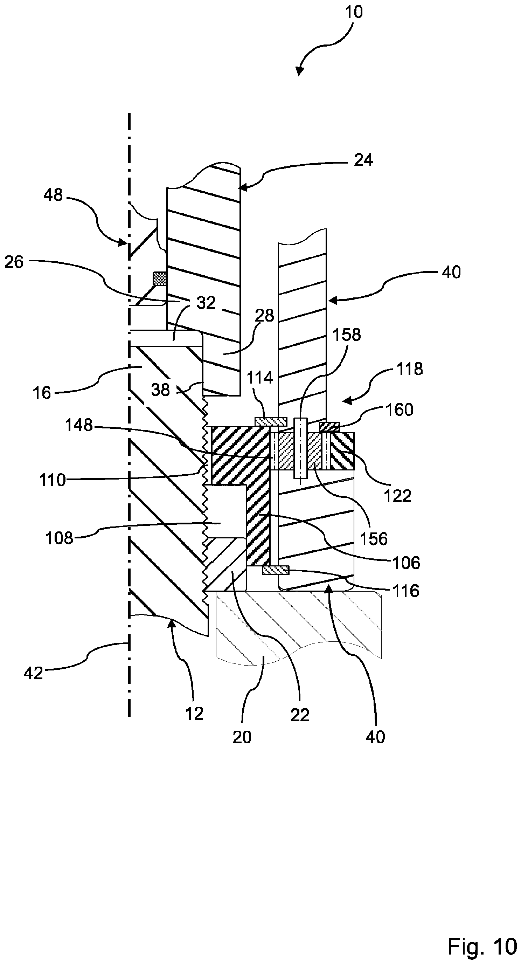

Figure 10 schematically shows a sectional view of a device 10 for tensioning and tightening a screw 12 according to another embodiment. In the shown configuration, the screwing unit 118 is provided in the form of a planetary gearing. In the planetary gearing, the connecting element 106 constitutes a sun gear coupled to one or more planet gears 156, e.g. three planet gears, engaged with the sun gear. The planet gears 156 are supported by the support element 40 such that they are rotatable about their longitudinal axis 158 but cannot be shifted relative to the support element 40. The planetary gearing further comprises a ring gear constituting the nut actuating element 122 which is engaged with the planet gears 156 and rotatably mounted to the support element 40 about the longitudinal axis 42 by means of a third retaining ring 160. In other words, the nut engagement element 22 is provided in the form of a ring element, on an inner surface of which gearing teeth are provided designed complementary to and engaged with gearing teeth provided on an outer surface of the planet gears 156, as depicted in Figure 10. The planet gears 156 are received within recesses provided in the support element 40. Accordingly, between adjacent planet gears 156, a side wall of the support element 40 is interposed.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention as defined in the claims.

This is in particular the case with respect to the following optional features which may be combined with some or all embodiments, items and/or features mentioned before in any technically feasible combination within the scope of the claims.

A device may be provided for tensioning and tightening a screw fastened to a component to be tightened. The device comprises an engagement element connectable to the screw and a support element configured to support the device against the component and to translationally guide the engagement element, particularly relative to the component to be tightened. Further, the device comprises a connecting element connectable to a nut engaged with the screw and a screwing unit for rotationally actuating the connecting element relative to the screw.

By providing the connecting element and the screwing unit, the device provides a structural interface for engaging with and actuating the nut engaged with the screw, i.e. in a state, in which the screw is tensioned and lengthened by the device. In this way, compared to known arrangements, in which an operator manually inserts a tool into the support element via openings to turn the nut accommodated therein, the proposed device enables an operator to conveniently and time-efficiently tighten or untighten a nut engaged with the screw. As a result, the device's operability may be improved and a time for tightening or untightening a screw connection may significantly be reduced.

Generally, the proposed device may be used, for example, in the field of steel constructions and various engine design applications, but is not limited to these applications. Rather, the proposed device may be used in any application in which screw connections, such as screws, bolts or bolt rods, are tightened by employing torque-free tensioning methods. In one example, the proposed device may be used to fasten a turbo charger to an engine crank case.

Specifically, the device may be used for tensioning and/or loosening a screw. In other words, the device may be used to preload and/or untighten a screw. The screw may be a tensable screw or any other tensable screw connection, such as a bolt or a threaded rod.

Further, the screw to be tensioned and/or loosened by the device may be intended and/or configured to tighten a component to which it is fastened. Alternatively or additionally, the screw to be tensioned and/or loosened by the device may be intended and/or configured for connecting, i.e. form- and/or force-fitting connecting, a first component to a second component. Accordingly, the device may be configured for tensioning a screw for connecting, i.e. form- and/or force-fitting connecting, a first component to a second component. For doing so, a first end of the screw may be connectable to the first component, i.e. by means of a threaded engagement. For example, the first component may be an engine crank case and the second element may be a turbo charger mount.

As set forth above, the device may comprise the engagement element connectable to the screw. In other words, the engagement element is configured for being connected to the screw, i.e. in a force- and/or form-fitting manner. For doing so, the engagement element may comprise an engagement section for engaging with the screw. Specifically, the engagement section may be engaged with the screw by means of a threaded engagement. The engagement section may be provided at an end portion of the engagement element. Further, the engagement section may be configured to engage with a second end of the screw arranged opposed to the first end thereof. For example, the engagement section may be provided with a thread designed complementary to a thread formed at the second end of the screw.

The device may further comprise the support element configured to support the engagement element against the component to be tightened during tensioning operation of the device. In other words, the support element is configured to, during the tensioning operation of the device, abut on the component to be tightened, i.e. on the first or the second component. In this way, the support element is capable of generating a force, i.e. a reaction force, counteracting the pulling force exerted onto the screw connected to the engagement element during tension operation of the device.

As set forth above, the support element may be designed to translationally guide the engagement element. In other words, the engagement element is translationally movable relative to the support element, i.e. along a longitudinal axis of the device, and thus relative to the component to be tightened.

Upon translationally moving the engagement element relative to the support element, a tensioning force may be applied to or may be removed from the screw connected to the engagement element. Thus, the device may be provided such that the engagement element is translationally movable relative to the support element so as to apply a tension to or to remove a tension from the screw.

The device may be provided such that the engagement element, at least partly, is accommodated within the support element. For example, the support element may be provided with a cavity, in particular a cylindrical cavity, which may extend along the longitudinal axis of the device. The cavity may be configured to at least partially receive the engagement element, i.e. the engagement section thereof. Further, the cavity may be provided so as to at least partly receive the connecting element and/or the screwing unit, thereby ensuring a compact design of the device.

The device may further comprise a screw actuating unit for actuating the engagement element and thus the screw connected thereto. Specifically, the screw actuating unit may be configured for translationally moving the engagement element relative to the support element and thus relative to the component to be tightened. In other words, the screw actuating unit may be configured for applying a tension to and/or to remove a tension from the screw.

The screw actuating unit may be a hydraulically driven actuating unit. This means that the screw actuating unit may use a hydraulic fluid for actuating the engagement element. In other words, a fluid is used to transfer motive power for the engagement element so as to move the engagement element relative to the component to be tightened and thus relative to the support element. For doing so, the screw actuating unit may comprise a fluid chamber containing a hydraulic fluid and an actuating means, e.g. a pump or a piston, for applying pressure to and/or releasing pressure from the fluid accommodated in the fluid chamber.

Specifically, the screw actuating unit may comprise a piston accommodated within and movable relative to the engagement element, i.e. along the device's longitudinal axis. The fluid chamber accommodating the fluid may be defined or delimited at least partly by the piston and/or the engagement element and/or the support element. Specifically, the fluid chamber may at least partly be provided in a space between the piston and/or the engagement element and/or the support element. In this configuration, the screw actuating unit may be provided such that a translational movement of the piston manipulates a volume of the fluid chamber and thereby moves the engagement element with respect to the support element and thus with respect to the component to be tightened.

More specifically, the fluid chamber may comprise two distinct portions, namely a piston portion delimited by and provided between the piston and the engagement element and an effective portion delimited by and provided between the engagement element and the support element which are fluid-communicatively connected, i.e. via bores provided in the engagement element. An effective base area of the piston portion may be smaller than an effective base area of the effective portion which may be perpendicular to a movement direction of both the piston and the engagement element, i.e. perpendicular to the device's longitudinal axis. By such an arrangement, the actuating force applied onto the piston may be hydraulically transformed into a force acting on the engagement element which is higher compared to that one acting on the piston. In this way, the screw actuating unit transforms an actuating force into a pulling force acting on the connecting element which is multiplied compared to the actuating force the piston is exerted to.

Further, the screw actuating unit may comprise a screw actuating element for receiving an actuating force. The screw actuating element and the piston may be designed and interlinked to one another such that a rotational movement of the screw actuating element causes a translational movement of the piston, i.e. along the device's longitudinal axis, which manipulates the volume of the fluid chamber and thereby moves the engagement element relative to the component. One example of interlinking the actuating element and the piston is given by Figure 1 and its accompanying description.

In the following, the configuration of the connecting element and the screwing unit is further specified.

The connecting element may be provided for structurally coupling the nut engaged with the screw to the device, i.e. the screwing unit. Specifically, the connecting element may be configured for being connected to the nut in a torque-transmitting manner. For doing so, the connecting element may be configured for being connectable to the nut in a form- and/or force-fitting manner.

For example, the connecting element, at least partially, may be provided with a shape designed complementary to a shape of the nut. More specifically, the connecting element may be provided with a recess, an inner surface of which, at least partially, may be designed complementary to an outer surface, i.e. a lateral outer surface, of the nut so as to enable a form-fitting connection between the connecting element and the nut.

Specifically, the nut may be provided with a threaded hole for receiving and engaging with a screw, bolt or threaded rod. Further, the nut may be provided with an outer surface configured to engage with a tool, i.e. in a force- and or form-fitting manner. For example, the nut may be a hexagon nut. Accordingly, the connecting element may be provided with a recessed portion being designed complementary to the hexagonal outer surface of the nut so as to enable a form-fitting connection therebetween.

In a further development, the connecting element may be provided in the form a connecting sleeve. The connecting sleeve may be provided with a recess for receiving the nut, the inner surface of which is designed complementary to the outer surface of the nut.

As set forth above, the connecting element may be rotationally actuated by means of the screwing unit. Accordingly, the connecting element may be coupled to the screwing unit in a torque-transmitting manner, particularly in a force- and/or form-fitting manner. For doing so, for example, a gear connection, a tongue-and-groove connection or any other type of connection between the connecting element and the screwing unit may be provided, which is suitable to transmit an actuating torque between the connecting element and the screwing unit. In this way, the engagement element may be rotationally moved relative to the engagement element and thus relative to the screw.

The connecting element may be provided with a coupling interface forming a part of the torque-transmitting connection between the connecting element and the screwing unit. The coupling interface may be designed complementary to a further coupling interface assigned to the screwing unit. For example, the coupling interface may be provided in the form of a gearing or gear teeth which particularly may be configured for being engaged with a complementary gearing or complementary gear teeth of the screwing unit. For example, the connecting element may be provided with the coupling interface, e.g. gearing or gear teeth, on an outer surface thereof. When the connecting element is provided in the form of the connecting sleeve, the coupling interface may be provided on a shell surface and/or on a front surface, i.e. facing the engagement element.

Further, the connecting element may be rotationally mounted in the device so as to be rotationally movable relative to the engagement element and thus relative to the screw. Specifically, the connecting element may be rotatably mounted to the engagement element and/or to the support element. For example, a bearing may be disposed between the connecting element and the engagement element or the support element providing for free rotation around the device's longitudinal axis, wherein a translational movement between the components is locked.

By being provided with the connecting element and the screwing unit, the device provides a means for tightening or untightening the nut engaged with the screw. As to substance, the screwing unit may be configured to, as set forth above, rotatably actuated to the connecting element relative to the engagement element and thus relative to the screw. In this way, as the connecting element may be connected to the nut in a torque-transmitting manner, the nut, i.e. together with the connecting element, is rotated relative to the engagement element and thus relative to the screw, thereby tightening or untightening the threaded connection provided between the nut and the screw. Accordingly, the connecting element may be rotatable relative to the screw around a longitudinal axis of the screw, which particularly coincides with the longitudinal axis of the device and/or the engagement element.

The screwing unit comprises a spring element. The spring element is structurally connected to the connecting element and the engagement element. Specifically, the spring element may be interposed between the connecting element and the engagement element or the support element. A first end of the spring element is structurally coupled to the connecting element and a second end thereof is structurally coupled to the engagement element in a torque-transmitting manner.

The spring element may be configured to exert an actuating torque on the connecting element. In other words, the spring element may be configured to exert an actuating force on the connecting element which causes the connecting element to rotate relative to support element and/or the engagement element and thus relative to the screw. The actuating torque may point in a direction parallel to the longitudinal axis of the screw. Accordingly, the actuating force causing the connecting element to rotate relative to the screw may point in a direction perpendicular to the longitudinal direction of the screw and/or the engagement element and/or the device.

Alternatively or additionally, the spring element may be provided to push the connecting element towards the nut in a state, in which the engagement element is connected to the screw. In this way, the connecting element is preloaded towards the nut, thereby ensuring to maintain the connecting engagement between the connecting element and the nut during operation of the device. For doing so, the bearing for supporting the connecting element within the device may be configured to allow a translational movement of the connecting element relative to the engagement element or the support element along the device's longitudinal axis.

The spring element may be provided in the form of a torsion spring. The torsion spring may be arranged in the device such that a longitudinal axis thereof coincides with the longitudinal axis of the screw and/or the engagement element and/or the device. Alternatively or additionally, the spring element may be provided in the form of a screw spring.

In a further development, the spring element may be configured for being elastically deformable upon rotationally actuating the connecting element relative to the screw. In other words, the spring element may be arranged and designed such that, when the connecting element is rotated relative to the screw and/or the engagement element and/or the support element, the spring element is elastically deformed. As a result, the spring element is loaded, thereby storing elastic energy. In this loaded state, the spring element may be configured to exert the actuating torque on the connecting element. In other words, the stored elastic energy may be used to exert the actuating torque to the connecting element and thus to rotationally actuate the connecting element so as to tighten or untighten the threaded connection between the nut and the screw.

By this configuration, the device may ensure that a screw is tensioned and tightened in a time-efficient and convenient manner for an operator, thereby improving the device's operability. As to substance, when using the device for tightening and tensioning a screw, at first, the screw may be connected to the component to be tightened and thereafter the nut may be screwed on the screw such that the nut abuts on the component. Then, an operator may engage the device with the screw. For doing so, the operator may put the device over the screw and the nut which protrude from the surface of the component. This is performed such that the screw and the nut are positioned within the cavity provided in the support element. Then, the operator may rotate the device relative to the component and the screw such that the connecting element is brought into a form-fitting connection with the nut and the protruding end of the screw is brought into threaded connection with the engagement element, i.e. the engagement section thereof. Once the connecting element and the nut are coupled to one another, a torque-transmitting connection is provided therebetween.

When, in the connected state of the connecting element and the nut, the device is further rotated so as to further tighten the engagement element to the screw, the connecting element is not rotated. This is because the connecting element is locked to the nut which abuts on the component and thereby is prevented from being further screwed on the screw. Accordingly, upon further rotating the device, a relative rotational movement between the connecting element and the engagement element and/or the support element is provided which elastically deforms the spring element. In this way, elastic energy is stored by the spring element which acts as an actuating torque on the connecting element.

Then, the screw actuating unit of the device may be actuated so as to tension and thus lengthen the screw. However, by lengthening the screw, the nut is lifted relative to the component such that it no longer abuts thereon. As a result, the nut is no longer subjected to frictional forces generated between the contact surface of the nut and the component to be tightened such that a rotational movement of the nut and thus of the connecting element engaged therewith is released. In this way, the device ensures that the nut is tightened by means of the elastic energy stored in the spring element as soon as to nut is lifted from the component.

Further, the screwing unit may comprise a locking element for releasably coupling the connecting element to the engagement element and/or the support element in a torque-transmitting manner by means of the spring element. Specifically, the locking element may be configured to releasably couple the spring element to the engagement element and/or the support element in a torque-transmitting manner. By providing the locking element, the spring element may be selectively coupled to the engagement element and/or the support element. In this way, a relative rotational movement between the spring element and the engagement element and/or the support element may either be locked or released. By locking the relative rotational movement, the spring element may be elastically deformable upon rotationally actuating the connecting element relative to the screw. However, when the relative rotational movement is released, the connecting element may be rotationally actuated relative to the screw without elastically deforming and thereby loading the spring element.

In a further development, the screwing unit may comprise a nut actuating element. The nut actuating element may constitute a user interface element. In other words, the nut actuating element may be configured for being manipulated by a user so as to operate the screwing unit and thus to rotate the nut, i.e. together with the connecting element.

The screwing unit may be configured to translate a movement of the nut actuating element into a rotational movement of the connecting element, particularly relative to the screw and/or the engagement element and/or the support element. Thus, the screwing unit may be configured to transform an actuation of the nut actuating element, i.e. induced by an operator, into a rotational movement of the connecting element so as to tighten or untighten the nut.

For doing so, the screwing unit may comprise a gear unit for transforming or translating the movement of the nut actuating element into a rotational movement of the connecting element, particularly relative to the screw and/or the engagement element and/or the support element. In other words, the gear unit may be configured to transform and input torque applied to the nut actuating element into an output torque, i.e. the actuating torque, applied to the connecting element.

The gear unit may be provided such that an absolute value of the output torque is higher compared to the input torque. Accordingly, upon rotationally actuating the nut actuating element, a rotational speed of the nut actuating element is higher compared to a rotational speed of the connecting element. In this way, the gear unit severs as a torque multiplier.

Alternatively, the gear unit may be provided such that the absolute value of the output torque is lower compared to the input torque. In this way, upon rotationally actuating the nut actuating element, a rotational speed of the nut actuating element is lower compared to a rotational speed of the connecting element. As a result, the gear unit enables to quickly rotate and thus tighten or untighten the nut.

In the context of the present disclosure, the term "gear unit" generally refers to any type of transmission or gear suitable for transforming an input force or input torque acting on the nut actuating element into an output torque acting on the connecting element.

For example, the gear unit may be configured to transform a translational movement of the nut actuating element into a rotational movement of the connecting element. Alternatively, the gear unit may be configured to transform a rotational movement of the nut actuating element into a rotational movement of the connecting element. In this configuration, the gear unit may be configured to provide speed and torque conversions from the rotatable nut actuating element to the rotatable connecting element.

According to one configuration, the nut actuating element may be rotatable about a rotation axis which is parallel to and translationally shifted relative to a rotational axis of the connecting element, i.e. the screw's longitudinal axis. Specifically, the connecting element may be provided with a first gear wheel designed complementary to and engaged with a second a gear wheel of the screwing unit. The first gear wheel may be constituted by a gearing or gear teeth circumferentially arranged around the device's longitudinal axis on an outer surface of the connecting element. The nut actuating element may constitute the second gear wheel which may be rotatably mounted to the support element.

Alternatively or additionally, the nut actuating element may be rotatable about a rotation axis which is inclined, particularly orthogonal, to the rotational axis of the connecting element, i.e. the screw's longitudinal axis.

The gear unit may comprise or consist of a bevel gear. For example, for providing the bevel gear, the nut actuating element may comprise a rotating shaft having a gear wheel designed complementary to a gearing or gear teeth of the connecting element. The gears of both the connecting element and the nut actuating element may be conically shaped.

Alternatively or additionally, the gear unit may comprise or consist of a worm drive. In this configuration, the nut actuating element may be provided in the form of a worm screw designed complementary to and engaged with a worm wheel comprised in the connecting element. Specifically, the worm wheel may be constituted by a gearing or gear teeth disposed circumferentially on the outer surface thereof.

As set forth above, the nut actuating element may constitute a user interface element which can be actuated by a user so as to operate the screwing unit and thus to manipulate, i.e. rotate, the connecting element. For improving the device's operability, the nut actuating element may at least partially protrude from an outer surface of the support element. In this way, a good accessibility of the nut actuating element for the operator may be ensured. In other words, the nut actuating element may extend through a side wall of the support element. Further, the actuating element may be movably, i.e. rotatably, mounted to the side wall of the support element.

The nut actuating element may be rotatably actuatable by an operator, for example, by using an electric or manual screwdriver. Accordingly, the nut actuating element may be provided with a tool interface provided by a recessed shape of the nut actuating element, e.g. having a recess with a hexagonal cross-section, for engagement with a screwdriver.

In a further development, the device may comprise a display unit for displaying, e.g. to the operator, a change of a torsion angle between the connecting element and the screw and, in a state, in which the connecting element is engaged with the nut, likewise between the nut and the screw. In other words, the display unit may be configured for indicating an amount of a relative rotational movement between the connecting element and the screw upon actuating the screwing unit. The display unit thus may provide visual feedback for the operator, thereby enabling a convenient, time-efficient and precise assembly and disassembly procedure when using the device.

More specifically, the display unit may be configured to display a parameter being indicative of the relative rotational movement between the connecting element and the screw. For example, the parameter may be proportional to the relative rotational movement, i.e. of a relative torsion angle between the components. Alternatively or additionally, the display unit may be configured to indicate whether a predefined minimal amount for the relative movement between the connecting element and the screw is adjusted or reached during operation of the device.

In particular, the display unit may comprise a rotatable pointer which particularly may be moved relative to a scale being indicative of the relative movement between the connecting element and the screw. In this configuration, the pointer may be coupled, particularly by means of a gear, to the connecting element such that a rotational movement of the connecting element is transformed into a movement of the pointer, i.e. a rotational movement thereof. The gear may be provided such that a rotational movement of the pointer, particularly a relative movement between the pointer and the scale, may be proportional to the relative movement between the connecting element and the screw. Further, the gear may be configured such that a rotational speed of the connecting element relative to the screw is translated into a higher or lower rotational speed of the pointer.

For example, the gear may be provided in the form of a bevel gear formed by a first gear wheel constituted by a gearing or gear teeth arranged circumferentially around the connecting element relative to its rotational axis and a second gear wheel provided at an end of a shaft comprising the pointer. The first gear wheel and the second gear wheel may be engaged, in particular by means of conically shaped gearings. In this configuration, the pointer may be provided at an end of the shaft arranged opposed to the second gear wheel. The shaft may extend through the side wall of the support element and be rotationally mounted thereto such that its end portion comprising the pointer protrudes from an outer surface of the support element. In a further development, the pointer may be comprised by the nut actuating element, in particular at the end of the nut actuating element which protrudes from the outer surface of the support element. Further, the scale may be disposed on the outer surface of the support element so as to be interposed between the side wall of the support element and the pointer.

In a further development, the screwing unit may comprise or be constituted by a planetary gear. For example, the planetary gear may comprise a sun gear connected to or being comprised in the connecting element, at least one planet gear rotatably mounted in the support element, and a ring gear rotatably mounted to the support element. In this configuration, the ring gear may form a user interface for rotatably actuating the connecting element upon rotation of the ring gear relative to the support element.

Furthermore, a system for tensioning and tightening at least two screws fastened to at least one component may be provided. The system may comprise at least two devices for tensioning and tightening a screw as described above. Accordingly, technical features which are described in connection with the device may also relate and be applied to the proposed system, and vice versa.

The proposed system may further comprise a central actuating unit for simultaneously actuating the screwing units of the at least two devices.

Usually, in common applications for tightening a component, more than one tensable screw may be used. However, in these applications, the screws are usually successively, i.e. one after another, tensioned and tightened. By contrast, the proposed system enables to simultaneously tension and tighten at least two screws using a single tool or device. Accordingly, assembly times and thus cycle times of an assembly line may be significantly reduced when using the system.

Each of the devices of the system comprises a screwing unit as described above with a connecting element, in particular a connecting sleeve. Accordingly, each of the connecting elements is connectable to a nut engaged with one of the screws, respectively. The central actuating unit may be mechanically or structurally connected to the screwing unit of each device, in particular so as to actuate the connecting element. Specifically, each of the screwing units may comprise the above described nut actuating element, in particular in the form of a gear wheel, each of which is coupled to the respective connecting element of the device in a torque-transmitting manner. For coupling the central actuating unit to the respective nut actuating elements, in particular in the form of the gear wheels, the central actuating unit may comprise a central gear wheel coupled to each of the nut actuating elements in a torque-transmitting manner. In this configuration, the operator may actuate the central gear wheel, for example, by means of a tool, i.e. a manually or electrically driven screwdriver.

Alternatively, the central actuating unit may comprise at least two electric actuators, i.e. electric motors, each of which is coupled to one of the nut actuating elements comprised in the respective screwing units of the devices in a torque-transmitting manner. In this configuration, the central actuating unit may comprise a central control unit for actuating each of the electric actuators.

In a further development, the central actuating unit may comprise a torque limiter for limiting the maximum actuation torque applied to each one of the connecting elements and thus to the respective nuts. In the above described configuration of the system, in which the central actuating unit comprises a central gear wheel, the torque limiter may be coupled to the central gear wheel, so as to limit the torque transmitted to or transmitted from the central gear wheel.

### Industrial Applicability

The proposed device 10 may be used for fastening and/or loosening a tensable screw 12 to components to be tightened. The device 10 may be used in different fields of application, such as in steel constructions or engine design applications. In the following, the use of the device 10 for tightening and loosening a screw connection is described in more detail.

To connect a first component 18, e.g. a crank case, to a second component 20, e.g. a turbo charger mount, using a device 10 as shown in Figure 1, the second component 20 is positioned next to the first component 18 and a screw 12 in the form of a screw is guided through a hole in the second component 20 and connected to the first component 18 by means of a threaded connection. As a result, the screw 12 extends from a side of the second component 20 which faces away from the first component 18. A nut 22 is screwed on the screw 12 from a first end 14 of the screw 12 which is arrange opposite to a second end 16 of the screw 12 positioned in and fastened to the first component 18.

Then, the device 10 is positioned over the screw 12 such that the screw 12 is housed by the support element 40. The support element 40 is placed on the second component 20. The engagement element 24 is positioned to introduce the screw 12 into the recess 32 to establish a threaded connection between the engagement element 24 and the first end 14 of the screw 12.

To apply a tension force to the screw 12, the screw actuating element 46 is rotationally actuated by using an electric or manual screwdriver. In this way, the piston 48 is translationally actuated relative to the engagement element 24 in a direction facing away from the second component 20. By moving the piston 48 in this direction, i.e. upwards, the piston portion 52 of the fluid chamber 50 decreases and hydraulic fluid is pushed therefrom into the effective portion 54 of the fluid chamber 50 via the connecting bores 56. As a result, the effective portion 54 increases in volume thereby exerting a pressure on the engagement element 24 which moves the same along the longitudinal axis 42 of the device 10 in respect to the support element 40. Accordingly, a distance between the engagement element 24 and the first and the second component 18, 20 increases, thereby tensioning and thus lengthening the screw 12.

In this tensioned condition of screw 12, for retaining the tension on the screw 12, the nut 22 is further tightened until the nut 22 abuts on the second component 20. This is performed by actuating the screwing unit 118, i.e. the nut actuating element 122, by using an electric or manual screwdriver.

For loosening a screw connection formed by the screw 12 and the nut 22, which was fastened by device 10 as described above, the support element 40 is positioned around the screw 12 on the second component 20. The exposed first end 14 of the screw 12 is fixed to the engagement element 24 by introducing the first end 14 of the connecting element in the recess 32 of the engagement element and connecting the first end 14 of the screw 12 with the engagement element 24 by a threaded engagement by means of complementary threads formed at the recess 32 of the engagement element 24 and the first end 14 of the screw 12.

To apply a tension force to the screw 12, the screw actuating element 46 is rotationally actuated by using an electric or manual screwdriver. As a result, the piston 48 is translationally actuated relative to the engagement element 24 in a direction facing away from the second component 20. By moving the piston 48 in this direction, i.e. upwards, the piston portion 52 of the fluid chamber 50 decreases and hydraulic fluid is pushed therefrom into the effective portion 54 of the fluid chamber 50 via the connecting bores 56. As a result, the effective portion 54 increases in volume thereby exerting a pressure on the engagement element 24 which moves the same along the longitudinal axis 42 of the device 10 in respect to the support element 40. Accordingly, a distance between the engagement element 24 and the first and the second component 18, 20 increases, thereby tensioning and thus lengthening the screw 12.

In a further step, the nut 22 positioned on the screw 12 is loosened. This is performed by actuating the screwing unit 118, i.e. the nut actuating element 122, by using an electric or manual screwdriver. After loosening the nut 22, the tension force applied to the connection element 12 is removed by rotationally actuating the screw actuating element 46 in a direction that is reversed compared to the rotational actuation of the same for generating the tension force as described above. As a result, the piston 48 is moved towards the second component 20, thereby increasing the piston portion 52 of the fluid chamber 50. Further, the effective portion 54 of the fluid chamber 50 decreases and the engagement element 24 moves towards the second component 20 and release the tension acting on the screw 12. Thereafter, the screw 12 is released from the engagement element 24, thereby removing the device 10 from the screw 12 and the first and second component 18, 20.

### List of reference numerals

- 10: device
- 12: screw
- 14: first end of the connecting element
- 16: second end of the connecting element
- 18: first component
- 20: second component
- 22: nut
- 24: engagement element
- 26: cylindrical portion of the engagement element
- 28: first end of the engagement element
- 30: second end of the engagement element
- 32: cylindrical recess
- 34: internal threads formed at the engagement element
- 36: side wall
- 38: threads formed at the connecting element
- 40: support element
- 42: longitudinal axis
- 44: screw actuating unit
- 46: screw actuating element
- 48: piston
- 50: fluid chamber
- 52: piston portion of the fluid chamber
- 54: effective portion of the fluid chamber
- 56: connecting bores
- 58: base area of the piston portion
- 60: base area of the effective portion
- 62: bore
- 64: wider portion of the bore
- 66: narrower portion of the bore
- 68: groove formed in the engagement element
- 70: first sealing ring
- 72: plate
- 74: first cylindrical portion of the support element
- 76: second cylindrical portion of the support element
- 78: connection portion of the support element
- 79: second sealing ring
- 80: third sealing ring
- 82: head end of the piston
- 84: rod end of the piston
- 86: shaft of the piston
- 88: sealing portion
- 90: recess provided in the piston
- 92: fourth sealing ring
- 94: threaded portion of the piston
- 96: cap
- 98: threaded connection
- 102: vent opening
- 104: closure screw
- 106: connecting element
- 108: hexagonal recess
- 110: through hole
- 112: bearing
- 114: first retaining ring
- 116: second retaining ring
- 118: screwing unit
- 120: spring element
- 122: nut actuating element
- 124: locking element
- 126: locking pin
- 128: groove
- 130: opening
- 132: tool interface
- 134: bevel gear
- 136: gear wheel
- 137: gear teeth
- 138: rotational axis of the actuating element
- 139: front surface of the connecting element
- 140: display unit
- 142: rotatable pointer
- 144: scale
- 146: worm drive
- 148: worm wheel
- 150: system
- 152: central actuating unit
- 154: central gear wheel
- 156: planet gear
- 158: rotational axis of the planet gear
- 160: third retaining ring

- T 1: actuating torque, output torque
- T2: input torque

## Claims

1. Device (10) for tensioning and tightening a screw (12) fastened to a component (18, 20), comprising an engagement element (24) connectable to the screw (12), a support element (40) configured to support the device (10) against the component (20) and to translationally guide the engagement element (24), a connecting element (106) connectable to a nut (22) engaged with the screw (12) and a screwing unit (118) for rotationally actuating the connecting element (106) relative to the screw (12), wherein the screwing unit (118) comprises a spring element (120) which is configured to exert an actuating torque for rotating the connecting element (106) about a longitudinal axis (42) of the screw (12), and wherein a first end of the spring element (120) is structurally coupled to the connecting element (106) in a torque-transmitting manner, **characterized in that** a second end of the spring element (120) is structurally coupled to the engagement element (24) in a torque-transmitting manner.

2. Device according to claim 1, wherein the connecting element (106) is connectable to the nut (22) in a force- and/or form-fitting manner.

3. Device according to claim 1 or 2, wherein the connecting element (106) is rotatably mounted to the support element (40).

4. Device according to any one of claims 1 to 3, wherein the spring element (120) is configured for being elastically deformable upon rotationally actuating the connecting element (106) relative to the screw (12).

5. Device according to any one of claims 1 to 4, wherein the screwing unit (118) further comprises a locking element (124) for releasably coupling the connecting element (106) to the engagement element (24) and/or the support element (40) in a torque-transmitting manner by means of the spring element (120).

6. Device according to any one of claims 1 to 5, wherein the screwing unit (118) is configured to translate a movement of a nut actuating element (122) into a rotational movement of the connecting element (106).

7. Device according to claim 6, wherein the screwing unit (118) comprises a gear unit (134; 146) configured to transform an input torque (T2) applied to the nut actuating element (122) into an output torque (T1) applied to the connecting element (122), wherein particularly an absolute value of the output torque (T1) is higher compared to the input torque (T2).

8. Device according to claim 6 or 7, wherein the nut actuating element (122) at least partially protrudes from an outer surface of the support element (40) and wherein the nut actuating element (122) extends through a side wall of the support element (40) and/or wherein the nut actuating element (122) is rotationally mounted to the side wall of the support element (40).

9. Device according to any one of claims 6 to 8, wherein the nut actuating element (122) is rotatably actuatable around an actuating axis (138) which is parallel or inclined to a rotational axis (42) of the connecting element (106).

10. Device according to any one of claims 1 to 9, further comprising a display unit (140) for displaying a change of a torsion angle between the connecting element (24) and the screw (12) upon actuating the screwing unit (118), wherein the display unit (140) comprises a rotatable pointer (142) coupled to the connecting element (106) via a gear unit (134) such that a rotational movement of the connecting element (106) relative to the screw (12) is translated into a rotational movement of the pointer (142).

11. System (150) for tensioning and tightening at least two screws (12) fastened to at least one component (18, 20), comprising at least two devices (10) according to any one of claims 1 to 10 and a central actuating unit (152) for simultaneously actuating the screwing units (118) of the at least two devices (10).

12. System according to claim 11, wherein each device (10) comprises a connecting element (106) connectable to a nut (22) engaged with one of the screws (12), and wherein the central actuating unit (152) is connected to each connecting element (106) in a torque-transmitting manner.

13. System according to claim 12, wherein each screwing unit (118) comprises a nut actuating element (122) coupled to the connecting element (106) in a torque-transmitting manner, and wherein the central actuating unit (152) comprises a central gear wheel (154) coupled to each nut actuating element (122) in a torque-transmitting manner.

## Patentansprüche

1. Vorrichtung (10) zum Spannen und Festziehen einer Schraube (12), die an einer Komponente (18, 20) befestigt ist, umfassend ein Eingriffselement (24), das mit der Schraube (12) verbindbar ist, ein Stützelement (40), das konfiguriert ist, um die Vorrichtung (10) gegen die Komponente (20) zu stützen und das Eingriffselement (24) translatorisch zu führen, ein Verbindungselement (106), das mit einer Mutter (22) verbindbar ist, die mit der Schraube (12) in Eingriff steht, und eine Schraubeinheit (118) zum drehbaren Betätigen des Verbindungselements (106) relativ zu der Schraube (12), wobei die Schraubeinheit (118) ein Federelement (120) umfasst, das konfiguriert ist, um ein Betätigungsdrehmoment zum Drehen des Verbindungselements (106) um eine Längsachse (42) der Schraube (12) herum auszuüben, und wobei ein erstes Ende des Federelements (120) mit dem Verbindungselement (106) in einer drehmomentübertragenden Weise strukturell gekoppelt ist, **dadurch gekennzeichnet, dass** ein zweites Ende des Federelements (120) mit dem Eingriffselement (24) in einer drehmomentübertragenden Weise strukturell gekoppelt ist.

2. Vorrichtung nach Anspruch 1, wobei das Verbindungselement (106) mit der Mutter (22) in einer kraft- und/oder formschlüssigen Weise verbindbar ist.

3. Vorrichtung nach Anspruch 1 oder 2, wobei das Verbindungselement (106) an dem Stützelement (40) drehbar montiert ist.

4. Vorrichtung nach einem der Ansprüche 1 bis 3, wobei das Federelement (120) konfiguriert ist, bei dem drehbaren Betätigen des Verbindungselements (106) relativ zu der Schraube (12) elastisch verformbar zu sein.

5. Vorrichtung nach einem der Ansprüche 1 bis 4, wobei die Schraubeinheit (118) ferner ein Verriegelungselement (124) zum lösbaren Koppeln des Verbindungselements (106) mit dem Eingriffselement (24) und/oder dem Stützelement (40) mittels des Federelements (120) in einer drehmomentübertragenden Weise umfasst.

6. Vorrichtung nach einem der Ansprüche 1 bis 5, wobei die Schraubeinheit (118) konfiguriert ist, um eine Bewegung eines Mutterbetätigungselements (122) in eine Drehbewegung des Verbindungselements (106) zu translatieren.

7. Vorrichtung nach Anspruch 6, wobei die Schraubeinheit (118) eine Getriebeeinheit (134; 146) umfasst, die konfiguriert ist, um ein Eingangsdrehmoment (T2), das auf das Mutterbetätigungselement (122) ausgeübt wird, in ein Ausgangsdrehmoment (T1) umzuwandeln, das auf das Verbindungselement (122) ausgeübt wird, wobei insbesondere ein Absolutwert des Ausgangsdrehmoments (T1) verglichen mit dem Eingangsdrehmoment (T2) höher ist.

8. Vorrichtung nach Anspruch 6 oder 7, wobei das Mutterbetätigungselement (122) mindestens teilweise von einer Außenoberfläche des Stützelements (40) vorsteht und wobei sich das Mutterbetätigungselement (122) durch eine Seitenwand des Stützelements (40) erstreckt und/oder wobei das Mutterbetätigungselement (122) an der Seitenwand des Stützelements (40) drehbar montiert ist.

9. Vorrichtung nach einem der Ansprüche 6 bis 8, wobei das Mutterbetätigungselement (122) um eine Betätigungsachse (138) herum drehbar betätigt werden kann, die parallel oder geneigt zu einer Drehachse (42) des Verbindungselements (106) ist.

10. Vorrichtung nach einem der Ansprüche 1 bis 9, ferner umfassend eine Anzeigeeinheit (140) zum Anzeigen einer Änderung eines Torsionswinkels zwischen dem Verbindungselement (24) und der Schraube (12) bei dem Betätigen der Schraubeinheit (118), wobei die Anzeigeeinheit (140) einen drehbaren Zeiger (142) umfasst, der mit dem Verbindungselement (106) über eine Getriebeeinheit (134) derart gekoppelt ist, dass eine Drehbewegung des Verbindungselements (106) relativ zu der Schraube (12) in eine Drehbewegung des Zeigers (142) translatiert wird.

11. System (150) zum Spannen und Festziehen mindestens von mindestens zwei Schrauben (12), die an mindestens einer Komponente (18, 20) befestigt sind, umfassend mindestens zwei Vorrichtungen (10) nach einem der Ansprüche 1 bis 10 und eine zentrale Betätigungseinheit (152) zum gleichzeitigen Betätigen der Schraubeinheiten (118) der mindestens zwei Vorrichtungen (10).

12. System nach Anspruch 11, wobei jede Vorrichtung (10) ein Verbindungselement (106) umfasst, das mit einer Mutter (22) verbindbar ist, die mit einer der Schrauben (12) in Eingriff steht, und wobei die zentrale Betätigungseinheit (152) mit jedem Verbindungselement (106) in einer drehmomentübertragenden Weise verbunden ist.

13. System nach Anspruch 12, wobei jede Schraubeinheit (118) ein Mutterbetätigungselement (122) umfasst, das mit dem Verbindungselement (106) in einer drehmomentübertragenden Weise gekoppelt ist, und wobei die zentrale Betätigungseinheit (152) ein zentrales Getrieberad (154) umfasst, das mit jedem Mutterbetätigungselement (122) in einer drehmomentübertragenden Weise gekoppelt ist.

## Revendications

1. Dispositif (10) pour la tension et le serrage d'une vis (12) fixée à un composant (18, 20), comprenant un élément de mise en prise (24) pouvant être relié à la vis (12), un élément de support (40) conçu pour supporter le dispositif (10) contre le composant (20) et pour guider en translation l'élément de mise en prise (24), un élément de liaison (106) pouvant être relié à un écrou (22) en prise avec la vis (12) et une unité de vissage (118) pour actionner en rotation l'élément de liaison (106) par rapport à la vis (12), dans lequel l'unité de vissage (118) comprend un élément de ressort (120) qui est conçu pour exercer un couple d'actionnement pour faire tourner l'élément de liaison (106) autour d'un axe longitudinal (42) de la vis (12), et dans lequel une première extrémité de l'élément de ressort (120) est structurellement accouplée à l'élément de liaison (106) d'une manière à transmettre le couple, **caractérisé en ce qu'**une seconde extrémité de l'élément de ressort (120) est accouplée structurellement à l'élément de mise en prise (24) d'une manière à transmettre le couple.

2. Dispositif selon la revendication 1, dans lequel l'élément de liaison (106) peut être relié à l'écrou (22) par ajustement de force et/ou de forme.

3. Dispositif selon la revendication 1 ou 2, dans lequel l'élément de liaison (106) est monté en rotation sur l'élément de support (40).

4. Dispositif selon l'une quelconque des revendications 1 à 3, dans lequel l'élément de ressort (120) est conçu pour être élastiquement déformable lors d'un actionnement en rotation de l'élément de liaison (106) par rapport à la vis (12).

5. Dispositif selon l'une quelconque des revendications 1 à 4, dans lequel l'unité de vissage (118) comprend en outre un élément de verrouillage (124) pour accoupler de manière amovible l'élément de liaison (106) à l'élément de mise en prise (24) et/ou à l'élément de support (40) d'une manière à transmettre le couple au moyen de l'élément de ressort (120).

6. Dispositif selon l'une quelconque des revendications 1 à 5, dans lequel l'unité de vissage (118) est conçue pour translater un mouvement d'un élément d'actionnement d'écrou (122) en un mouvement de rotation de l'élément de liaison (106).

7. Dispositif selon la revendication 6, dans lequel l'unité de vissage (118) comprend une unité d'engrenage (134 ; 146) conçue pour transformer un couple d'entrée (T2) appliqué à l'élément d'actionnement d'écrou (122) en un couple de sortie (T1) appliqué à l'élément de liaison (122), dans lequel en particulier une valeur absolue du couple de sortie (T1) est plus élevée par rapport au couple d'entrée (T2).

8. Dispositif selon la revendication 6 ou 7, dans lequel l'élément d'actionnement d'écrou (122) fait au moins partiellement saillie d'une surface externe de l'élément de support (40) et dans lequel l'élément d'actionnement d'écrou (122) s'étend à travers une paroi latérale de l'élément de support (40) et/ou dans lequel l'élément d'actionnement d'écrou (122) est monté en rotation sur la paroi latérale de l'élément de support (40).

9. Dispositif selon l'une quelconque des revendications 6 à 8, dans lequel l'élément d'actionnement d'écrou (122) est actionnable en rotation autour d'un axe d'actionnement (138) qui est parallèle ou incliné par rapport à un axe de rotation (42) de l'élément de liaison (106).

10. Dispositif selon l'une quelconque des revendications 1 à 9, comprenant en outre une unité d'affichage (140) destinée à afficher un changement d'angle de torsion entre l'élément de liaison (24) et la vis (12) lors de l'actionnement de l'unité de vissage (118), dans lequel l'unité d'affichage (140) comprend un pointeur rotatif (142) accouplé à l'élément de liaison (106) par l'intermédiaire d'une unité d'engrenage (134) de telle sorte qu'un mouvement de rotation de l'élément de liaison (106) par rapport à la vis (12) est translaté en un mouvement de rotation du pointeur (142).

11. Système (150) pour la tension et le serrage d'au moins deux vis (12) fixées à au moins un composant (18, 20), comprenant au moins deux dispositifs (10) selon l'une quelconque des revendications 1 à 10 et une unité d'actionnement centrale (152) pour actionner simultanément les unités de vissage (118) des au moins deux dispositifs (10).

12. Système selon la revendication 11, dans lequel chaque dispositif (10) comprend un élément de liaison (106) pouvant être relié à un écrou (22) en prise avec l'une des vis (12), et dans lequel l'unité d'actionnement centrale (152) est reliée à chaque élément de liaison (106) d'une manière à transmettre le couple.

13. Système selon la revendication 12, dans lequel chaque unité de vissage (118) comprend un élément d'actionnement d'écrou (122) accouplé à l'élément de liaison (106) d'une manière à transmettre le couple, et dans lequel l'unité d'actionnement centrale (152) comprend une roue dentée centrale (154) accouplée à chaque élément d'actionnement d'écrou (122) d'une manière à transmettre le couple.
